(19) Europäisches Patentamt
European Patent Office
Office européen des brevets

(11) **EP 1 674 353 B1**

(12) **EUROPÄISCHE PATENTSCHRIFT**

(45) Veröffentlichungstag und Bekanntmachung des Hinweises auf die Patenterteilung:
**01.04.2009 Patentblatt 2009/14**

(51) Int Cl.:
***B60R 21/26*** *(2006.01)*   ***B60R 21/18*** *(2006.01)*
*B60R 21/00* *(2006.01)*   *B60R 21/02* *(2006.01)*
*B60R 21/20* *(2006.01)*

(21) Anmeldenummer: **05090359.0**

(22) Anmeldetag: **22.12.2005**

(54) **Insassenschutzeinrichtung**

Occupant protection device

Dispositif de protection de passagers

(84) Benannte Vertragsstaaten:
**DE FR GB SE**

(30) Priorität: **24.12.2004 DE 102004063268**

(43) Veröffentlichungstag der Anmeldung:
**28.06.2006 Patentblatt 2006/26**

(73) Patentinhaber: **TAKATA - PETRI AG**
**63743 Aschaffenburg (DE)**

(72) Erfinder:
• **Riedel, Andreas**
**89257 Illertissen (DE)**
• **Rasch, Georg**
**89346 Biebertal-Bühl (DE)**

• **Sendelbach, Hans-Peter**
**89250 Senden (DE)**
• **Weyrich, Christian**
**89231 Neu-Ulm (DE)**

(74) Vertreter: **Baumgärtel, Gunnar et al**
**Patentanwälte Maikowski & Ninnemann,**
**Postfach 15 09 20**
**10671 Berlin (DE)**

(56) Entgegenhaltungen:
WO-A-97/47498          WO-A-20/04091982
US-A1- 2002 089 156    US-A1- 2003 006 594
US-A1- 2003 141 709    US-B1- 6 196 575
US-B1- 6 273 462

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung bezieht sich auf eine Insassenschutzeinrichtung mit den Merkmalen gemäß dem Oberbegriff des Patentanspruchs 1.

Eine Insassenschutzeinrichtung ist aus der US-Patentschrift 5,642,903 bekannt. Diese vorbekannte Insassenschutzeinrichtung ist mit einer Brennkammer ausgestattet, die eine Überdruckkammer und einen luftgefüllten Diffusor-Raum unter Umgebungsdruck aufweist. Die Überdruckkammer und der Diffusor-Raum sind durch ein pyrotechnisches Verschlusselement voneinander getrennt, so dass ein unter Überdruck stehendes Gas in der Überdruckkammer diese nicht verlassen kann. Erst wenn das pyrotechnische Verschlusselement gezündet und verbrannt wird, entsteht eine Durchlassverbindung zwischen der Überdruckkammer und dem Diffusor-Raum, so dass das unter Überdruck stehende Gas die Überdruckkammer verlassen und durch den Diffusor-Raum aus der Brennkammer heraus in den mit der Brennkammer verbundenen Airbag gelangen kann.

Aus der internationalen Patentanmeldung WO 2004/091982 A1 ist eine andere Insassenschutzeinrichtung bekannt. Diese andere Insassenschutzeinrichtung weist einen Gasgenerator und einen mit dem Gasgenerator verbundenen Airbag auf, der im Falle eines Unfalls von dem Gasgenerator aufgeblasen wird. Der Gasgenerator ist mit einer rohrförmigen Brennkammer mit Treibsatzmaterial ausgestattet, das von einer auslösbaren Anzündladung, die zu einer an einem Rohrende der Brennkammer gasdicht aufgesetzten "Zündpille" gehört, gezündet wird. Zum Befüllen des Airbags wird sowohl das beim Verbrennen der Anzündladung gebildete Gas als auch und das beim Verbrennen des Treibsatzmaterials gebildete Gas verwendet. In der Brennkammer ist eine kylinderförmige Gasleiteinrichtung vorhanden, die das von der Anzündladung generierte Gas zunächst zum Treibsatzmaterial leitet; ein unmittelbares Verlassen der Brennkammer ist somit unterbunden. Das Gas der Anzündladung zündet damit zunächst das Treibsatzmaterial, bevor es gemeinsam mit dem Gas des Treibsatzmaterials zum Brennkammerausgang gelangen kann. Der Brennkammerausgang ist durch ein an dem anderen Rohrende der rohrförmigen Brennkammer angeordnetes Drosselelement gebildet.

Eine gattungsgemäße Insassenschutzeinrichtung ist aus US 2003/000 6594 bekannt.

Der Erfindung liegt die Aufgabe zugrunde, eine Insassenschutzeinrichtung der eingangs angegebenen Art dahingehend zu verbessern, dass sich diese besonders einfach und kostengünstig herstellen lässt; trotzdem soll ein zum Befüllen des Airbags geeignetes Füllgas in ausreichendem Maße gebildet werden.

Diese Aufgabe wird erfindungsgemäß durch eine Insassenschutzeinrichtung mit den Merkmalen gemäß Anspruch 1 gelöst. Vorteilhafte Ausgestaltungen der erfindungsgemäßen Insassenschutzeinrichtung sind in Unteransprüchen angegeben.

Danach ist erfindungsgemäß vorgesehen, dass das brennbare Material ausschließlich durch eine elektrisch zündbare Anzündladung einer elektrisch zündbaren Zündpille gebildet ist, die Brennkammer röhrenförmig ist, wobei an einem Rohrende die elektrisch auslösbare Zündpille gasdicht aufgesetzt ist und an dem anderen Rohrende eine Drosselscheibe mit zumindest einem Durchgangsloch angeordnet ist, durch das das Gas die Brennkammer verlässt.

Als besonders vorteilhaft wird es angesehen, wenn der Airbag im Falle eines Unfalls derart positioniert und mit dem Gasgenerator auf einen derart großen Gasdruck aufgeblasen wird, dass zumindest das Becken des Fahrzeuginsassen in Richtung des Fahrzeuginneren bewegt wird. Ein solches "Wegschubsen" des Beckenbereichs ist aus der US-amerikanischen Patentanmeldung US 2003/0141709 A1 bekannt: Sobald der sich in vorzugsweise in Taillen- oder Beckenhöhe entfaltende Airbag aufgeblasen wird, drückt dieser das Becken des Fahrzeuginsassen ins Innere des Fahrzeugs. Im Falle eines Seitenaufpralls wird somit erreicht, dass der Fahrzeuginsasse von der ins Fahrzeuginnere hineindrückenden bzw. intrudierenden Tür- und/oder Karosserieverkleidung (z. B. der B-Säule) wegbewegt wird. Die intrudierenden Fahrzeugbereiche treffen somit mit einer geringeren Differenzgeschwindigkeit auf den sensiblen Abdomen- und Thoraxbereich des Fahrzeuginsassen auf, als dies sonst der Fall wäre; denn der Relativweg, den die intrudierenden Fahrzeugbereiche bis zum Auftreffen auf den Fahrzeuginsassen zurücklegen, wird vergrößert. Die Verletzungsgefahr wird also durch das Wegbewegen des Fahrzeuginsassen reduziert.

Der Airbag kann beispielsweise im Außenwandbereich des Fahrzeugs, insbesondere im Bereich einer Kraftfahrzeugtür oder einer Fahrzeugsäule befestigt oder darin integriert sein. Alternativ kann der Airbag in oder am Fahrzeugsitz, beispielsweise im oder am Sitzuntergestell, im oder am Lehnenrahmen oder im/am Lehnendrehpunkt des Fahrzeugsitzes befestigt bzw. darin integriert sein. Auch ist die Befestigung in oder an einem Verkleidungsteil des Fahrzeugsitzes möglich.

Gemäß einer anderen vorteilhaften Ausgestaltung ist vorgesehen, dass der Airbag in oder an einem Gurtendbeschlag für einen Sicherheitsgurt des Fahrzeugs befestigt oder darin integriert ist.

Eine weitere vorteilhafte Ausgestaltung sieht vor, dass der Airbag in oder an einem Sicherheitsgurt der Insassenschutzeinrichtung befestigt oder darin integriert ist. Ein wesentlicher Vorteil dieser Ausgestaltung der Insassenschutzeinrichtung ist darin zu sehen, dass diese aufgrund der Integration des Airbags mit dem Sicherheitsgurt besonders einfach montiert werden kann; denn die Montage setzt nicht voraus, dass karosserieseitig oder fahrzeugsitzseitig besondere Montagevorkehrungen getroffen sind. Konkret kann die erfindungsgemäße Insassenschutzeinrichtung also bei beliebigen Fahrzeugsitzen und in beliebigen Fahrzeugen montiert werden, indem ein entsprechendes Gurtsystem mit integriertem Airbag im Fahrzeug montiert wird. Aufgrund der Integration des Airbags mit dem Sicherheitsgurt (Gurtband) ist es darüber hinaus möglich, auch herkömmliche Fahrzeuge nachträglich mit der erfindungsgemäßen Insassenschutzeinrichtung zu versehen. Es muss lediglich das zuvor vorhandene Sicherheitsgurtsystem durch die erfindungsgemäße Insassenschutzeinrichtung mit einem im Sicherheitsgurt integrierten Airbag ersetzt werden. Außerdem wird aufgrund der Integration des Airbags im Sicherheitsgurt zusätzlich eine Gurtstraffung erreicht: Sobald nämlich der Airbag im Beckenbereich des Fahrzeuginsassen aufgeblasen und der Fahrzeuginsasse in Richtung Fahrzeuginneres bewegt wird, wird gleichzeitig eine Gurtstraffung herbeigeführt, die den Fahrzeuginsassen im Fahrzeugsitz sicher hält. Im Übrigen wird im Falle einer Integration des Airbags im Gurtband stets eine optimale Abdeckung des Beckens des Fahrzeuginsassen unabhängig von der jeweiligen Position des Fahrzeugsitzes erreicht; denn selbst bei einem Verstellen der Position des Fahrzeugsitzes wird der mit dem Gurtband integrierte Airbag stets entsprechend mitbewegt und ist somit zwangsläufig immer relativ zum Becken des Fahrzeuginsassen optimal positioniert.

Besonders einfach und damit vorteilhaft lässt sich der Airbag im Sicherheitsgurt integrieren, wenn der Sicherheitsgurt doppelwandig ausgebildet ist und der Airbag im Inneren des doppelwandigen Sicherheitsgurts (bzw. Gurtbands) eingelegt ist. Der Airbag kann dabei im Inneren des Sicherheitsgurts zusammengelegt sein oder sich schlauchförmig im Inneren des Sicherheitsgurtes erstrecken.

Alternativ kann der Airbag außen am Sicherheitsgurt angebracht sein: Beim Aufblasen wird er dann vom Sicherheitsgurt geführt, vorzugsweise durch eine oder mehrere Schlaufen, Gleitringe Ösen oder dergleichen.

Bevorzugt handelt es sich bei dem Airbag um einen Beckenairbag, der den Beckenbereich des Fahrzeuginsassen vollständig abdeckt. Durch eine vollständige Abdeckung des Beckenbereichs lässt sich sicherstellen, dass der Fahrzeuginsasse schnellstmöglich und ohne großes Verletzungsrisiko im Unfallfall ins Fahrzeuginnere gedrückt bzw. bewegt wird.

Für ein optimales Wegbewegen des Fahrzeuginsassen in Richtung des Fahrzeuginneren wird es als vorteilhaft angesehen, wenn der Airbag im Beckenbereich des Fahrzeuginsassen zwischen dem der Fahrzeugaußenseite zugewandten Becken und der Fahrzeugaußenseite angeordnet ist. Das dem Fahrzeuginneren zugewandte Becken wird folglich vom Airbag nicht "getroffen" und von diesem auch nicht abgedeckt.

Um auch bei körperlich großen und schweren Fahrzeuginsassen sicherzustellen, dass der Körper im Falle eines Unfalls in Richtung des Fahrzeuginneren bewegt wird, ist der Gasgenerator vorzugsweise derart ausgestaltet, dass er den Airbag auf einen Innendruck von mindestens 1,5 bar, vorzugsweise auf einen Innendruck über 3 bar aufbläst. Das Airbagmaterial ist entsprechend derart gewählt und verarbeitet, dass es entsprechende Arbeitsdrücke aufbauen kann, ohne beschädigt zu werden.

Im Übrigen wird der Airbag vorzugsweise derart im Sicherheitsgurt integriert, dass er sich zwischen dem Sicherheitsgurt und dem Becken des Fahrzeuginsassen entfaltet. Durch das Aufblasen im Bereich zwischen dem Sicherheitsgurt und dem Fahrzeuginsassen wird eine besonders effektive Gurtstraffung des Sicherheitsgurts erreicht, so dass - wie eingangs bereits erwähnt - eine doppelte Schutzwirkung erzielt wird: zum einen wird der Fahrzeuginsasse ins Fahrzeuginnere gedrückt und zum anderen wird eine Gurtstraffung des Sicherheitsgurtes erreicht. Die Kraftwirkung zum Verschieben des Beckens wird dabei durch den Sicherheitsgurt aufgebracht; ein Abstützen des Airbags an anderen Kraftfahrzeugelementen (z. B. innere Außenwand des Fahrzeugs) ist nicht erforderlich.

Alternativ kann der Airbag derart im Sicherheitsgurt integriert sein, dass er sich zwischen dem Sicherheitsgurt und der inneren Oberfläche der Fahrzeugaußenwand des Fahrzeugs - nachfolgend kurz "innere" Fahrzeugaußenwand oder nur kurz Fahrzeugaußenwand genannt - entfaltet. Die Kraftwirkung zum Verschieben des Beckens muss damit durch ein Abstützen des Airbags an anderen Kraftfahrzeugelementen (z. B. Außenwand des Fahrzeugs) bewirkt werden.

Gemäß einer anderen vorteilhaften Ausgestaltung der Insassenschutzeinrichtung ist vorgesehen, dass das Gewebe des Sicherheitsgurts elastisch ist und der Airbag derart im Sicherheitsgurt integriert ist, dass er im Unfallfall das Gewebe des Sicherheitsgurts weitet bzw. aufbläst. Hierfür ist der Airbag vorzugsweise im Inneren des Gewebes angeordnet. Beim Aufblasen erstreckt sich der Airbag somit schlauchförmig im Gewebeinneren des Sicherheitsgurtes, so dass dieser ebenfalls schlauchförmig dicker wird und sich dabei verkürzt. Das Weiten bzw. Aufblasen des Gurtes kann beispielsweise konzentrisch erfolgen. Vorzugsweise ist der Airbag ausschließlich in demjenigen Bereich des Sicherheitsgurtes integriert, der dem der Fahrzeugaußenseite zugewandten Beckenbereich des Fahrzeuginsassen zugeordnet ist.

Um einen vorzeitigen Druckabfall im Airbag zu vermeiden, weist dieser vorzugsweise keine Abströmöffnung auf.

Besonders bevorzugt ist der Airbag gasdicht ausgeführt. Beispielsweise ist im Bereich von Gassacknähten des Airbags Abdichtmaterial vorhanden, um die Dichtigkeit des Airbags sicherzustellen. Außerdem kann der Airbag silikonbeschichtetes Gewebematerial aufweisen oder aus solchem Material bestehen, um die Gasdichtigkeit zu erreichen.

Der Airbag ist vorzugsweise in einem Modulgehäuse aus Metall oder Kunststoff untergebracht. Das Modulgehäuse kann beispielsweise als Softcover oder als Hartschale ausgeführt sein, dabei kann eine sichtbare oder unsichtbare Montage gewählt werden.

Eine Modulabdeckung des Modulgehäuses kann beispielsweise eine Reißnaht oder eine Materialschwächung, insbesondere eine Klappe mit einem Filmscharnier, aufweisen, um ein Entfalten des Airbags zu erleichtern und damit zu beschleunigen.

Zum Filtern und/oder Kühlen des in der Brennkammer gebildeten Gases ist vorzugsweise zwischen zumindest einer Abströmöffnung des Gasgenerators und dem Drosselelement zumindest ein Filter- und/oder Kühlelement angeordnet. Alternativ kann das Filter- und/oder Kühlelement auch innerhalb der Brennkammer angeordnet sein, und zwar vorzugsweise unmittelbar vor dem Brennkammerausgang.

Die Erfindung wird nachfolgend anhand von Ausführungsbeispielen erläutert; dabei zeigen:

Fig. 1     ein erstes Ausführungsbeispiel für eine erfindungsgemäße Insassenschutzeinrichtung vor Unfalleintritt,

Fig. 2     die Insassenschutzeinrichtung gemäß Figur 1 nach Unfalleintritt,

Fig. 3 - 5     weitere Ausführungsbeispiele für eine erfindungsgemäße Insassenschutzeinrichtung,

Fig. 6     ein Ausführungsbeispiel für einen Gasgenerator für die Insassenschutzeinrichtungen gemäß den Figuren 1 bis 5 und

Fig. 7     ein Ausführungsbeispiel für einen Airbag für die Insassenschutzeinrichtungen gemäß den Figuren 1 bis 5.

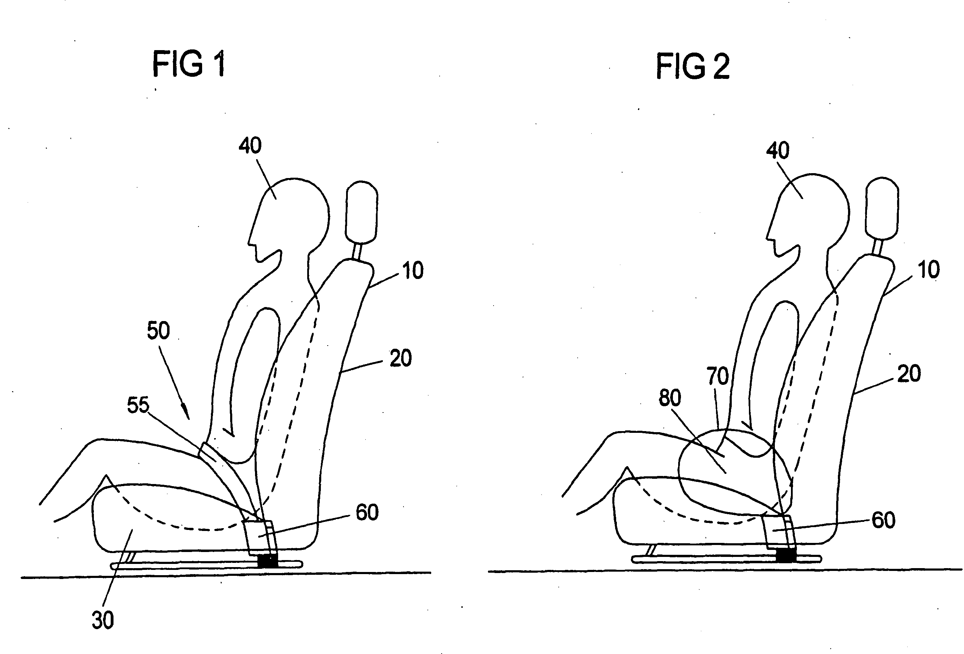

In der Figur 1 erkennt man einen Fahrzeugsitz 10 mit einer Rückenlehne 20 und einer Sitzfläche 30. Auf dem Fahrzeugsitz 10 befindet sich ein Fahrzeuginsasse, der mit dem Bezugszeichen 40 gekennzeichnet ist.

Der Fahrzeuginsasse 40 wird mit einem Sicherheitsgurt 50 im Fahrzeugsitz 10 gehalten. In der Figur 1 ist der Übersichtlichkeit halber von dem Sicherheitsgurt 40 lediglich der Beckengurt 55 dargestellt.

In der Figur 1 ist darüber hinaus ein Gasgenerator 60 schematisch gezeigt, der mit einem in dem Bekkengurt 55 integrierten, vorzugsweise gasdichten Bekkenairbag in Verbindung steht. Der Beckenairbag ist in der Figur 1 nicht sichtbar, da er in dem Beckengurt 55 integriert ist. Eine solche Integration kann beispielsweise erreicht werden, indem der Beckengurt 55 doppelwandig bzw. schlauchförmig ausgebildet wird und der Beckenairbag im Inneren des Beckengurts 55 zusammengefaltet eingelegt wird.

Im Falle eines Seiten-Crashs bzw. Seitenaufpralls, der mittels geeigneter Sensoren in üblicher Weise festgestellt wird, wird der Gasgenerator 60 den im Bekkengurt 55 integrierten Beckenairbag aufblasen. Dies ist in der Figur 2 dargestellt. Man erkennt den Beckenairbag 70 nach dem Aufblasen.

Der Beckenairbag 70 deckt den Beckenbereich 80 des Fahrzeuginsassen 40 vollständig ab und drückt den Fahrzeuginsassen 40 in Richtung des Fahrzeuginneren. Hierzu ist der Beckenairbag 70 an der der Fahrzeugaußenseite zugewandten Seite des Beckens 80 des Fahrzeuginsassen 10 angeordnet. Sobald also der Bekkenairbag 70 aufgeblasen wird, wird das Becken 80 des Fahrzeuginsassen 40 in Richtung des Fahrzeuginneren gedrückt, so dass der Abdomen- und Thorax-Bereich des Fahrzeuginsassen 40 von der im Falle eines Seitenaufpralls ins Fahrzeuginnere intrudierenden Tür- bzw. Karosserieverkleidung (z.B. der B-Säule) wegbewegt wird. Der Abstand zwischen dem Fahrzeuginsassen 40 bzw. dem Beckenbereich 80 des Fahrzeuginsassen 40 und der Tür bzw. Karosserieverkleidung wird somit vergrößert, so dass die Aufprallenergie der intrudierenden Fahrzeugkarosserie vor dem Aufprall auf dem Fahrzeuginsassen 40 reduziert wird.

Der Beckenairbag 70 ist im zusammengelegten Zustand vorzugsweise derart im Beckengurt 55 integriert, dass er sich zwischen dem Beckengurt 55 und dem Becken 80 des Fahrzeuginsassen 40 entfaltet. Durch das Aufblasen im Bereich zwischen Gurt und Fahrzeuginsassen wird zusätzlich eine Gurtstraffung des Beckengurts 55 bzw. des Sicherheitsgurts 50 insgesamt erreicht, so dass eine doppelte Schutzwirkung erzielt wird: zum einen wird der Fahrzeuginsasse 40 ins Fahrzeuginnere gedrückt, und zum anderen wird eine Gurtstraffung des Sicherheitsgurtes 50 erreicht.

Um ein wirkungsvolles Wegbewegen des Fahrzeuginsassen 40 zu erreichen, erzeugt der Gasgenerator 60 einen Arbeitsdruck im Beckenairbag 70 von zumindest 1,5 bis 3 bar.

Ein derart großer Arbeitsdruck ist empfehlenswert, um sicherzustellen, dass auch schwere Fahrzeuginsassen sicher aus dem Gefahrenbereich weggedrückt werden.

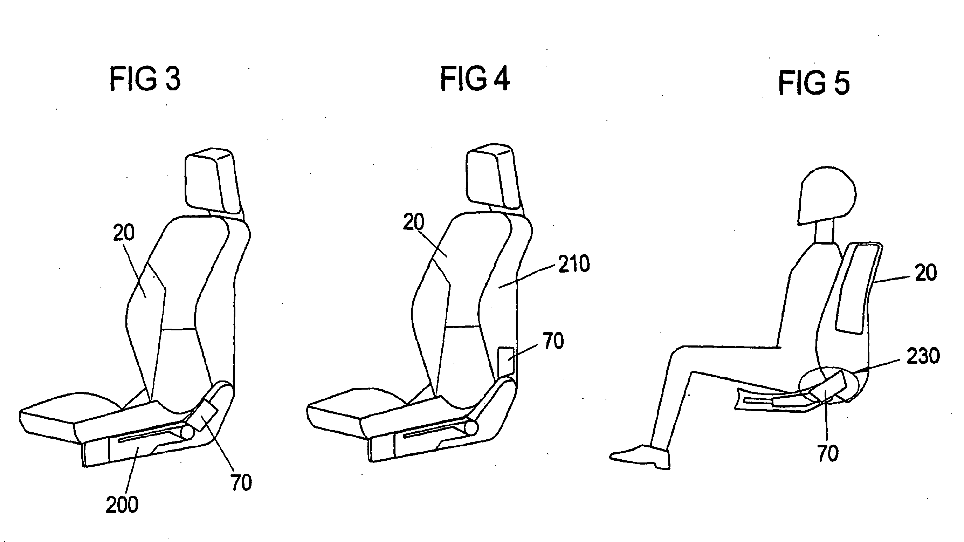

In den Figuren 3, 4 und 5 sind weitere Ausführungsbeispiele für erfindungsgemäße Insassenschutzeinrichtungen gezeigt.

Bei dem Ausführungsbeispiel gemäß der Figur 3 ist der Airbag 70 am Sitzuntergestell 200 des Fahrzeugsitzes 10 angebracht; bei dem Ausführungsbeispiel gemäß der Figur 4 ist der Airbag 70 am Lehnenrahmen 210 des Sitzes 10 befestigt.

Die Figur 5 zeigt einen Airbag 70, der im Bereich des Lehnendrehpunkts 230 des Sitzes 10 befestigt ist.

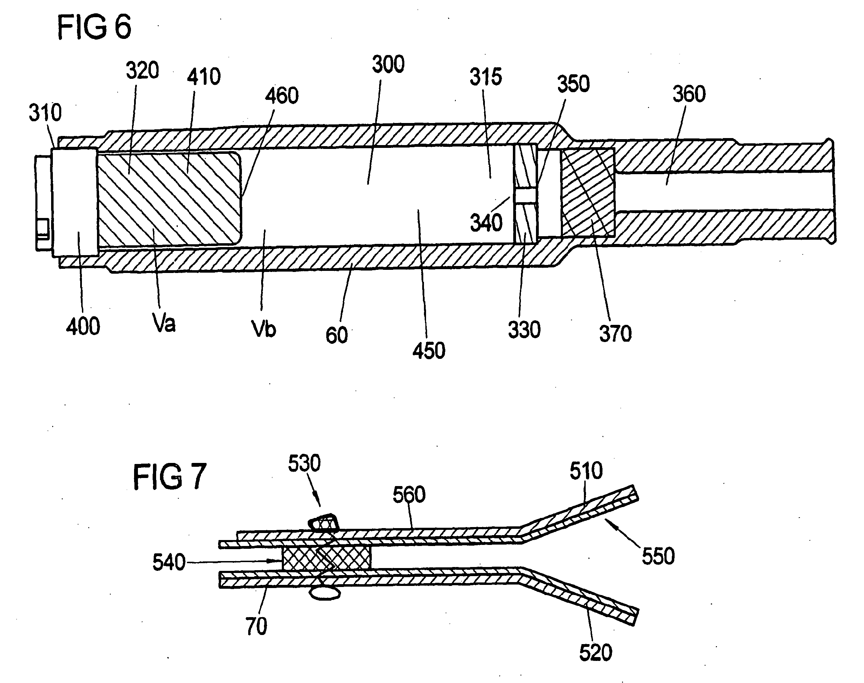

In der Figur 6 sieht man ein Ausführungsbeispiel für den Gasgenerator 60 der Insassenschutzeinrichtungen gemäß den Figuren 1 bis 5.

Man erkennt eine rohrförmige Brennkammer 300, an deren einem Rohrende 310 eine elektrisch zündbare Zündpille 320 gasdicht eingesetzt ist. Das andere Rohrende 315 der rohrförmigen Brennkammer 300 wird durch eine Drosselscheibe 330 mit einer mittig angeordneten Gasdurchlassöffnung 340 abgeschlossen.

An der der Brennkammer 300 abgewandten Seite 350 der Drosselscheibe 330 schließt sich ein Abströmkanal 360 an, in dem ein Kühl- und/oder Filterelement 370 eingesetzt ist. Die Funktion dieses Kühl- und/oder Filterelements 370 besteht darin, die in der Brennkammer 300 gebildeten Verbrennungsgase zu filtern und zu kühlen, bevor diese in den zu befüllenden Gassack 70 gelangen.

Die elektrische Auslösung der Zündpille 320 erfolgt durch eine elektrische Spannung oder einen elektrischen Strom, der an eine elektrische Schnittstelle 400 der Zündpille 320 angelegt wird. Nach dem Zünden der Zündpille 320 verbrennt die Anzündladung 410 der Zündpille 320 quasi vollständig in der Brennkammer 300; ein Entweichen des Gases an dem Rohrende 310 wird durch die Schnittstelle 400 der Zündpille 320, die einen gasdichten Abschluss schafft, verhindert.

Bei dem Ausführungsbeispiel gemäß der Figur 6 ist das Kühl- und/oder Filterelement 370 außerhalb der Brennkammer 300 angeordnet; alternativ kann sich das Kühl- und/oder Filterelement 370 auch innerhalb der Brennkammer 300 befinden, vorzugsweise unmittelbar neben der Drosselscheibe 330. Wahlweise können Kühl- und/oder Filterelemente 370 sowohl innerhalb der Brennkammer 300 als auch innerhalb des Abströmkanals 360 angeordnet sein.

Wie sich in der Figur 6 erkennen lässt, ist kein zusätzliches Treibsatzmaterial vorhanden; dies bedeutet, dass zum Befüllen des Airbags 70 ausschließlich Gas verwendet wird, das von der Anzündladung 410 erzeugt wird. Die Brennkammer 300 ist demgemäß ansonsten "leer" bzw. nur mit Luft unter Umgebungsdruck gefüllt. Das leere Volumen Vb des leeren Raumes 450 der Brennkammer 300 ist größer als das Montagevolumen Va der Anzündladung 410; die Grenzfläche zwischen dem Montagevolumen Va der Anzündladung 410 und dem leeren Raum 450 ist in der Figur 6 mit dem Bezugszeichen 460 bezeichnet. Es gilt also

$$Vb > Va.$$

Falls, wie bereits angesprochen, das Kühl- und/oder Filterelement 370 innerhalb der Brennkammer 300 angeordnet wird, so ist das restliche leere Volumen Vb' der Brennkammer vorzugsweise entsprechend bemessen; es gilt dann also:

$$Vb' > Va.$$

In der Figur 7 ist ein Randabschnitt des Airbags 70 im Detail gezeigt. Man erkennt zwei Materiallagen 510 und 520, die miteinander vernäht sind. Um ein Entweichen des Gases durch die Nahtbereiche 530 zu vermeiden, sind diese mittels eines Abdichtmaterials 540 gasdicht isoliert.

Die beiden Materiallagen 510 und 520 bestehen beispielsweise jeweils aus einem mit Silikon 550 beschichteten Gewebematerial 560; die Materiallagen 510 und 520 sind somit gasdicht.

**Bezugszeichenliste**

| | |
|---|---|
| 10 | Fahrzeugsitz |
| 20 | Rückenlehne |
| 30 | Sitzfläche |
| 40 | Fahrzeuginsasse |
| 50 | Sicherheitsgurt |
| 55 | Beckengurt |
| 60 | Gasgenerator |
| 70 | Beckenairbag |
| 80 | Beckenbereich |
| 200 | Sitzuntergestell |
| 210 | Lehnenrahmen |
| 230 | Lehnendrehpunkt |
| 300 | Brennkammer |
| 310 | Rohrende |
| 315 | anderes Rohrende |
| 320 | Zündpille |
| 330 | Drosselscheibe |
| 340 | Gasdurchlassöffnung |
| 350 | abgewandte Seite |
| 360 | Abströmkanal |
| 370 | Kühl- und/oder Filterelement |
| 400 | Schnittstelle |
| 410 | Brennmaterial |
| 450 | leerer Raum |
| 460 | Grenzfläche |
| Va | Volumen der Anzündladung |
| Vb | Volumen der Brennkammer |
| Vb' | restliches Volumen der Brennkammer |

**Patentansprüche**

1. Insassenschutzeinrichtung zum Schützen eines Fahrzeuginsassen (40) im Falle eines Fahrzeugunfalls mit

- einem Gasgenerator (60) und
- einem mit dem Gasgenerator (60) verbundenen Airbag (70), der im Falle eines Unfalls von dem Gasgenerator (60) aufgeblasen wird,
- wobei der Gasgenerator eine Brennkammer (300) aufweist, in der im Unfallfall ein brennbares Material (410) unter Bildung eines den Airbag (70) aufblasenden Gases verbrannt wird,
- wobei in der Brennkammer (300) ein gas- oder luftgefüllter Raum vorgesehen ist, dessen Volumen (Vb) größer ist als das Volumen (Va) des brennbaren Materials (410) und in dem sich das von dem brennbaren Material (410) gebildete Gas sammelt, bevor es die Brennkammer an einem Brennkammerausgang verlässt,

- wobei das brennbare Material ausschließlich durch eine elektrisch zündbare Anzündladung (410) einer elektrisch zündbaren Zündpille (320) gebildet ist,

- wobei die Brennkammer (300) röhrenförmig ist, wobei an einem Rohrende (310) die elektrisch auslösbare Zündpille (320) gasdicht aufgesetzt ist und an dem anderen Rohrende (315) eine Drosselscheibe (330) mit zumindest einem Durchgangsloch (340) angeordnet ist, durch das das Gas die Brennkammer (300) verlässt,

**dadurch gekennzeichnet, dass**

- der gas oder luftgefüllte Raum mit Gas oder Luft unter Umgebungsdruck gefüllt ist.

2. Insassenschutzeinrichtung nach Anspruch 1, **dadurch gekennzeichnet, dass** das zumindest eine Durchgangsloch (340) mittig angeordnet ist.

3. Insassenschutzeinrichtung nach einem der voranstehenden Ansprüche, **dadurch gekennzeichnet, dass** der Airbag im inneren Außenwandbereich des Fahrzeugs, insbesondere im Bereich einer Kraftfahrzeugtür oder einer Fahrzeugsäule, befestigt ist.

4. Insassenschutzeinrichtung nach Anspruch 1, **dadurch gekennzeichnet, dass** der Airbag im Bereich des Fahrzeugsitzes (10) befestigt ist.

5. Insassenschutzeinrichtung nach Anspruch 4, **dadurch gekennzeichnet, dass** der Airbag am Sitzuntergestell (200) des Fahrzeugsitzes (10) befestigt ist.

6. Insassenschutzeinrichtung nach Anspruch 4, **dadurch gekennzeichnet, dass** der Airbag am Lehnenrahmen (210) des Fahrzeugsitzes (10) befestigt ist.

7. Insassenschutzeinrichtung nach Anspruch 4, **dadurch gekennzeichnet, dass** der Airbag am Lehnendrehpunkt (230) des Fahrzeugsitzes (10) befestigt ist.

8. Insassenschutzeinrichtung nach Anspruch 4, **dadurch gekennzeichnet, dass** der Airbag in oder an einem Verkleidungsteil des Fahrzeugsitzes befestigt ist.

9. Insassenschutzeinrichtung nach Anspruch 1, **dadurch gekennzeichnet, dass** der Airbag in oder an einem Gurtendbeschlag eines Sicherheitsgurtes des Fahrzeugs befestigt ist. ,

10. Insassenschutzeinrichtung nach Anspruch 1, **dadurch gekennzeichnet, dass** der Airbag (70) in oder an einem Sicherheitsgurt (50) der Insassenschutzeinrichtung befestigt ist.

11. Insassenschutzeinrichtung nach Anspruch 10, **dadurch gekennzeichnet, dass** der Sicherheitsgurt (50) doppelwandig oder schlauchförmig ausgebildet ist.

12. Insassenschutzeinrichtung nach Anspruch 11, **dadurch gekennzeichnet, dass** der Airbag (70) im Inneren des doppelwandigen oder schlauchförmigen Sicherheitsgurts (50) eingelegt ist.

13. Insassenschutzeinrichtung nach Anspruch 10, **dadurch gekennzeichnet, dass** der Airbag (70) außen an dem Sicherheitsgurt angebracht ist, wobei er beim Aufblasen vom Sicherheitsgurt, insbesondere durch eine oder mehrere Schlaufen, geführt wird.

14. Insassenschutzeinrichtung nach einem der voranstehenden Ansprüche, **dadurch gekennzeichnet, dass** der Airbag ein Beckenairbag (70) ist, der den Beckenbereich (80) des Fahrzeuginsassen (40) abdeckt.

15. Insassenschutzeinrichtung nach einem der voranstehenden Ansprüche, **dadurch gekennzeichnet, dass** der Gasgenerator (60) derart ausgestaltet ist, dass der Airbag (70) auf einen Druck von mindestens 1,5 bar aufgeblasen wird.

16. Insassenschutzeinrichtung nach Anspruch 15, **dadurch gekennzeichnet, dass** der Airbag (70) auf einen Druck von mindestens 3 bar aufgeblasen wird.

17. Insassenschutzeinrichtung nach einem der voranstehenden Ansprüche, **dadurch gekennzeichnet, dass** der Airbag (70) im aufgeblasenen Zustand an der der Fahrzeugaußenseite des Fahrzeugs zugewandten Seite des Beckens (80) anliegt und die dem Fahrzeuginneren zugewandte Seite des Beckens frei vom Airbag (70) bleibt.

18. Insassenschutzeinrichtung nach einem der voranstehenden Ansprüche, **dadurch gekennzeichnet, dass** sich der Airbag (70) zwischen dem Sicherheitsgurt (50) und dem Becken (80) des Fahrzeuginsassen (40) entfaltet.

19. Insassenschutzeinrichtung nach einem der voranstehenden Ansprüche 1 bis 17, **dadurch gekennzeichnet, dass** sich der Airbag (70) zwischen dem Sicherheitsgurt (50) und der inneren Fahrzeugaußenseite des Fahrzeugs entfaltet.

**20.** Insassenschutzeinrichtung nach einem der voranstehenden Ansprüche, **dadurch gekennzeichnet, dass** das Gewebe des Sicherheitsgurts elastisch ist und der Airbag (70) derart im Sicherheitsgurt integriert ist, dass er im Unfallfall das Gewebe des Sicherheitsgurts weitet bzw. aufbläst, insbesondere konzentrisch weitet bzw. konzentrisch aufbläst.

**21.** Insassenschutzeinrichtung nach Anspruch 20, **dadurch gekennzeichnet, dass** der Airbag (70) ausschließlich in demjenigen Bereich des Sicherheitsgurtes integriert ist, der dem der Fahrzeugaußenseite zugewandten Beckenbereich des Fahrzeuginsassen zugeordnet ist.

**22.** Insassenschutzeinrichtung nach einem der voranstehenden Ansprüche, **dadurch gekennzeichnet, dass** der Airbag (70) abströmöffnungslos ausgebildet ist.

**23.** Insassenschutzeinrichtung nach Anspruch 22, **dadurch gekennzeichnet, dass** der Airbag (70) gasdicht ausgeführt ist.

**24.** Insassenschutzeinrichtung nach Anspruch 22 oder 23, **dadurch gekennzeichnet, dass** im Bereich von Gassacknähten (530) des Airbags (70) Abdichtmaterial (540) vorhanden ist.

**25.** Insassenschutzeinrichtung nach einem der voranstehenden Ansprüche, **dadurch gekennzeichnet, dass** der Airbag (70) silikonbeschichtetes Gewebematerial (560) aufweist oder aus solchem Material besteht.

**26.** Insassenschutzeinrichtung nach einem der voranstehenden Ansprüche, **dadurch gekennzeichnet, dass** der Airbag in einem Modulgehäuse aus Metall oder Kunststoff untergebracht ist.

**27.** Insassenschutzeinrichtung nach Anspruch 26, **dadurch gekennzeichnet, dass** das Modulgehäuse als Softcover oder als Hartschale ausgeführt ist.

**28.** Insassenschutzeinrichtung nach Anspruch 26 oder 27, **dadurch gekennzeichnet, dass** das Modulgehäuse sichtbar oder unsichtbar montiert ist.

**29.** Insassenschutzeinrichtung nach einem der voranstehenden Ansprüche 1 bis 28, **dadurch gekennzeichnet, dass** eine Modulabdeckung des Modulgehäuses eine Reißnaht oder eine Materialschwächung, insbesondere eine Klappe mit einem Filmscharnier, aufweist.

**30.** Insassenschutzeinrichtung nach einem der voranstehenden Ansprüche, **dadurch gekennzeichnet, dass** zwischen zumindest einer Abströmöffnung des Gasgenerators (60) und dem Drosselelement (330) zumindest ein Filter- und/oder Kühlelement (370) angeordnet ist.

**31.** Insassenschutzeinrichturig nach einem der voranstehenden Ansprüche, **dadurch gekennzeichnet, dass** zumindest ein Filter und/oder Kühlelement in der Brennkammer, vorzugsweise unmittelbar neben dem Drosselelement, angeordnet ist.

## Claims

**1.** Occupant protection device for protecting a vehicle occupant (40) in the event of a vehicle accident, with

> - a gas generator (60) and
> - an airbag (70) which is connected to the gas generator (60) and is inflated by the gas generator (60) in the event of an accident,
> - the gas generator having a combustion chamber (300) in which, in the event of an accident, a combustible material (410) is combusted forming a gas which inflates the airbag (70),
> - the combustion chamber (300) being provided with a gas- or air-filled space, the volume (Vb) of which is larger than the volume (Va) of the combustible material (410) and in which the gas formed by the combustible material (410) collects before it leaves the combustion chamber at a combustion chamber outlet,
> - the combustible material being formed exclusively by an electrically ignitable igniting charge (410) of an electrically ignitable tablet (320),
> - the combustion chamber (300) being tubular, the electrically releasable tablet (320) being placed in a gastight manner on one tube end (310) and a throttle disc (330) with at least one through-hole (340), through which the gas leaves the combustion chamber (300), being arranged on the other tube end (315),

> **characterized in that**

> - the gas- or air-filled space is filled with gas or air under ambient pressure.

**2.** Occupant protection device according to Claim 1, **characterized in that** the at least one through-hole (340) is arranged centrally.

**3.** Occupant protection device according to one of the preceding claims, **characterized in that** the airbag is fastened in the inner outer wall region of the vehicle, in particular in the region of a motor vehicle door or a vehicle pillar.

**4.** Occupant protection device according to Claim 1, **characterized in that** the airbag is fastened in the region of the vehicle seat (10).

5. Occupant protection device according to Claim 4, **characterized in that** the airbag is fastened to the seat underframe (200) of the vehicle seat (10).

6. Occupant protection device according to Claim 4, **characterized in that** the airbag is fastened to the backrest frame (210) of the vehicle seat (10).

7. Occupant protection device according to Claim 4, **characterized in that** the airbag is fastened to the backrest pivot point (230) of the vehicle seat (10).

8. Occupant protection device according to Claim 4, **characterized in that** the airbag is fastened in or to a covering part of the vehicle seat.

9. Occupant protection device according to Claim 1, **characterized in that** the airbag is fastened in or to a belt end fitting of a seatbelt of the vehicle.

10. Occupant protection device according to Claim 1, **characterized in that** the airbag (70) is fastened in or to a seatbelt (50) of the occupant protection device.

11. Occupant protection device according to Claim 10, **characterized in that** the seatbelt (50) is of double-walled or tubular design.

12. Occupant protection device according to Claim 11, **characterized in that** the airbag (70) is placed in the interior of the double-walled or tubular seatbelt (50).

13. Occupant protection device according to Claim 10, **characterized in that** the airbag (70) is fitted on the outside of the seatbelt, it being guided by the seatbelt, in particular by one or more loops, during the inflation.

14. Occupant protection device according to one of the preceding claims, **characterized in that** the airbag is a pelvic airbag (70) which covers the pelvic region (80) of the vehicle occupant (40).

15. Occupant protection device according to one of the preceding claims, **characterized in that** the gas generator (60) is designed in such a manner that the airbag (70) is inflated to a pressure of at least 1.5 bar.

16. Occupant protection device according to Claim 15, **characterized in that** the airbag (70) is inflated to a pressure of at least 3 bar.

17. Occupant protection device according to one of the preceding claims, **characterized in that** the airbag (70), in the inflated state, bears against that side of the pelvis (80) which faces the outside of the vehicle, and that side of the pelvis which faces the vehicle interior remains free from the airbag (70).

18. Occupant protection device according to one of the preceding claims, **characterized in that** the airbag (70) is deployed between the seatbelt (50) and the pelvis (80) of the vehicle occupant (40).

19. Occupant protection device according to one of the preceding Claims 1 to 17, **characterized in that** the airbag (70) is deployed between the seatbelt (50) and the inner outside of the vehicle.

20. Occupant protection device according to one of the preceding claims, **characterized in that** the woven fabric of the seatbelt is elastic and the airbag (70) is integrated in the seatbelt in such a manner that it widens or inflates, in particular concentrically widens or concentrically inflates, the woven fabric of the seatbelt in the event of an accident.

21. Occupant protection device according to Claim 20, **characterized in that** the airbag (70) is integrated exclusively in the same region of the seatbelt which is assigned to the vehicle occupant's pelvic region which faces the outside of the vehicle.

22. Occupant protection device according to one of the preceding claims, **characterized in that** the airbag (70) is designed without an outflow opening.

23. Occupant protection device according to Claim 22, **characterized in that** the airbag (70) is of gastight design.

24. Occupant protection device according to Claim 22 or 23, **characterized in that** there is sealing material (540) in the region of gas bag seams (530) of the airbag (70).

25. Occupant protection device according to one of the preceding claims, **characterized in that** the airbag (70) has silicone-coated woven material (560) or is made from such material.

26. Occupant protection device according to one of the preceding claims, **characterized in that** the airbag is accommodated in a module housing of metal or plastic.

27. Occupant protection device according to Claim 26, **characterized in that** the module housing is designed as a soft cover or as a hard shell.

28. Occupant protection device according to Claim 26 or 27, **characterized in that** the module housing is fitted visibly or invisibly.

29. Occupant protection device according to one of the preceding Claims 1 to 28, **characterized in that** a module covering of the module housing has a tear seam or a material weakening, in particular a flap with a film hinge.

30. Occupant protection device according to one of the preceding claims, **characterized in that** at least one filter element and/or cooling element (370) is arranged between at least one outflow opening of the gas generator (60) and the throttle element (330).

31. Occupant protection device according to one of the preceding claims, **characterized in that** at least one filter element and/or cooling element is arranged in the combustion chamber, preferably directly next to the throttle element.

**Revendications**

1. Dispositif de protection de passager pour protéger un passager (40) d'un véhicule dans le cas d'un accident du véhicule, comprenant :

    - un générateur de gaz (60) et
    - un coussin gonflable (70) relié au générateur de gaz (60), qui est gonflé par le générateur de gaz (60) dans le cas d'un accident,
    - dans lequel le générateur de gaz comprend une chambre de combustion (300) dans laquelle un matériau combustible (410) est amené à brûler en cas d'accident en formant un gaz qui gonfle le coussin gonflable (70),
    - dans lequel, dans la chambre de combustion (300) il est prévu un espace rempli de gaz ou d'air, dont le volume (Vb) est supérieur au volume (Va) du matériau combustible (410) et dans lequel le gaz formé par le matériau combustible (410) se rassemble avant de quitter la chambre de combustion à une sortie de la chambre de combustion,
    - dans lequel le matériau combustible est formé exclusivement par une charge d'amorçage susceptible d'être allumée électriquement (410) d'une pastille d'amorçage (320) susceptible d'être allumée électriquement,
    - dans lequel la chambre de combustion (300) est en forme de tube, dans lequel la pastille d'amorçage à déclenchement électrique (320) est posée à une extrémité du tube (310) de manière étanche aux gaz, et à l'autre extrémité (315) du tube est agencée une plaque à étranglement (330) avec au moins un trou de passage (340) à travers lequel le gaz quitte la chambre de combustion (300),

**caractérisé en ce que**
l'espace rempli de gaz ou d'air est rempli avec un gaz ou avec de l'air sous pression ambiante.

2. Dispositif de protection de passager selon la revendication 1, **caractérisé en ce que** ledit au moins un trou de passage (340) est agencé au milieu.

3. Dispositif de protection de passager selon l'une des revendications précédentes, **caractérisé en ce que** le coussin gonflable est fixé dans la zone intérieure de la paroi extérieure du véhicule, en particulier dans la zone d'une porte ou d'un montant du véhicule.

4. Dispositif de protection de passager selon la revendication 1, **caractérisé en ce que** le coussin gonflable est fixé dans la zone du siège de véhicule (10).

5. Dispositif de protection de passager selon la revendication 4, **caractérisé en ce que** le coussin gonflable est fixé sur le châssis inférieur (200) du siège de véhicule (10).

6. Dispositif de protection de passager selon la revendication 4, **caractérisé en ce que** le coussin gonflable est fixé sur le châssis du dossier (210) du siège de véhicule (10).

7. Dispositif de protection de passager selon la revendication 4, **caractérisé en ce que** le coussin gonflable est fixé au niveau du point de rotation (230) du dossier du siège de véhicule (10).

8. Dispositif de protection de passager selon la revendication 4, **caractérisé en ce que** le coussin gonflable est fixé dans ou sur une pièce d'habillage du siège de véhicule.

9. Dispositif de protection de passager selon la revendication 1, **caractérisé en ce que** le coussin gonflable est fixé dans ou sur une monture terminale d'une ceinture de sécurité du véhicule.

10. Dispositif de protection de passager selon la revendication 1, **caractérisé en ce que** le coussin gonflable (70) est fixé dans ou sur une ceinture de sécurité (50) du dispositif de protection de passager.

11. Dispositif de protection de passager selon la revendication 10, **caractérisé en ce que** la ceinture de sécurité (50) est réalisée à double paroi ou en forme de tuyau.

12. Dispositif de protection de passager selon la revendication 11, **caractérisé en ce que** le coussin gonflable (70) est inséré à l'intérieur de la ceinture de sécurité (50) à double paroi ou en forme de tuyau.

13. Dispositif de protection de passager selon la revendication 10, **caractérisé en ce que** le coussin gonflable (70) est appliqué à l'extérieur sur la ceinture de sécurité, et lors du gonflage, il est guidé par la ceinture de sécurité, en particulier par une ou plusieurs boucles.

14. Dispositif de protection de passager selon l'une des revendications précédentes, **caractérisé en ce que** le coussin gonflable est un coussin gonflable pelvien (70), qui couvre la zone du pelvis (80) du passager de véhicule.

15. Dispositif de protection de passager selon l'une des revendications précédentes, **caractérisé en ce que** le générateur de gaz (60) est réalisé de telle façon que le coussin gonflable (70) est gonflé à une pression d'au moins 1,5 bars.

16. Dispositif de protection de passager selon la revendication 15, **caractérisé en ce que** le coussin gonflable (70) est gonflé à une pression d'au moins 3 bars.

17. Dispositif de protection de passager selon l'une des revendications précédentes, **caractérisé en ce que** le coussin gonflable (70) s'applique, dans l'état gonflé, contre le côté du pelvis (80) qui est tourné vers le côté extérieur du véhicule, et le côté du pelvis tourné vers l'intérieur du véhicule reste libre vis-à-vis du coussin gonflable (70).

18. Dispositif de protection de passager selon l'une des revendications précédentes, **caractérisé en ce que** le coussin gonflable (70) se déploie entre la ceinture de sécurité (50) et le pelvis (80) du passager de véhicule (40).

19. Dispositif de protection de passager selon l'une des revendications 1 à 17, **caractérisé en ce que** le coussin gonflable (70) se déploie entre la ceinture de sécurité (50) et la face intérieure du côté extérieur du véhicule.

20. Dispositif de protection de passager selon l'une des revendications précédentes, **caractérisé en ce que** le tissu de la ceinture de sécurité est élastique, et le coussin gonflable (70) est intégré dans la ceinture de sécurité de telle façon qu'il élargit ou respectivement qu'il fait gonfler le tissu de la ceinture de sécurité, en particulier l'élargit de façon concentrique ou le fait gonfler de façon concentrique, en cas d'accident.

21. Dispositif de protection de passager selon la revendication 20, **caractérisé en ce que** le coussin gonflable (70) est intégré exclusivement dans la région de la ceinture de sécurité qui est associée à la région du pelvis du passager du véhicule, qui est tournée vers le côté extérieur du véhicule.

22. Dispositif de protection de passager selon l'une des revendications précédentes, **caractérisé en ce que** le coussin gonflable (70) est réalisé dépourvu d'ouverture d'échappement.

23. Dispositif de protection de passager selon la revendication 22, **caractérisé en ce que** le coussin gonflable (70) est réalisé étanche aux gaz.

24. Dispositif de protection de passager selon la revendication 22 ou 23, **caractérisé en ce qu'**un matériau d'étanchement (540) est prévu dans la région des coutures (530) du coussin gonflable (70).

25. Dispositif de protection de passager selon l'une des revendications précédentes, **caractérisé en ce que** le coussin gonflable (70) comprend un matériau en tissu à revêtement de silicone (560), ou est formé d'un tel matériau.

26. Dispositif de protection de passager selon l'une des revendications précédentes, **caractérisé en ce que** le coussin gonflable est logé dans un boîtier de module en métal ou en matière plastique.

27. Dispositif de protection de passager selon la revendication 26, **caractérisé en ce que** le boîtier de module est réalisé sous la forme d'une couverture souple ou d'une coque dure.

28. Dispositif de protection de passager selon la revendication 26 ou 27, **caractérisé en ce que** le boîtier de module est monté visible ou invisible.

29. Dispositif de protection de passager selon l'une des revendications précédentes 1 à 28, **caractérisé en ce qu'**un recouvrement du boîtier de modules présente une couture déchirable ou un affaiblissement du matériau, en particulier un volet avec une charnière à bande.

30. Dispositif de protection de passager selon l'une des revendications précédentes, **caractérisé en ce qu'**au moins un élément filtrant et/ou de refroidissement (370) est agencé entre au moins une ouverture d'évacuation du générateur de gaz (60) et l'élément à étranglement (330).

31. Dispositif de protection de passager selon l'une des revendications précédentes, **caractérisé en ce qu'**au moins un élément filtrant et/ou un élément de refroidissement est agencé dans la chambre de combustion, de préférence directement à côté de l'élément à étranglement.

# FIG 1

# FIG 2

EP 1 674 353 B1

FIG 3

FIG 4

FIG 5

EP 1 674 353 B1

FIG 6

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5642903 A
- WO 2004091982 A1
- US 20030006594 A
- US 20030141709 A1